# EUROPÄISCHE PATENTSCHRIFT

(11) **EP 0 267 352 B1**
(45) Veröffentlichungstag und Bekanntmachung des Hinweises auf die Patenterteilung: **18.11.1993**
(21) Anmeldenummer: 87101424.7
(22) Anmeldetag: 03.02.1987
(51) Int. Cl.: B23Q 3/10, B23Q 16/00, B23Q 16/08

(54) **Vorrichtung zur wiederholbaren, hochgenauen Festlegung der relativen räumlichen Lage eines ersten Gegenstandes in Bezug auf zweite Gegenstände**
Device for repeatably setting the spatial position of a first object in relation to other objects with extreme accuracy
Dispositif pour fixer d'une manière réitérable et très précise la position dans l'espace d'un premier objet par rapport à d'autres objets

(30) Priorität: 10.10.1986 CH 4043/86
(43) Veröffentlichungstag der Anmeldung: 18.05.1988
(73) Patentinhaber: Büchler B-SET AG, CH-9230 Flawil (CH)
(72) Erfinder: Büchler, René, CH-9245 Oberbüren (CH)
(74) Vertreter: EGLI-EUROPEAN PATENT ATTORNEYS

(56) Entgegenhaltungen:
- EP-A- 0 111 092
- EP-A- 0 180 866
- DE-A- 2 402 218
- DE-A- 3 335 022
- US-A- 4 598 816
- US-A- 4 699 364
- US-E- 28 509

## Beschreibung

Die Erfindung bezieht sich auf eine Vorrichtung gemäß dem Oberbegriff des Patentanspruches 1. Eine derartige Vorrichtung ist aus der EP 0 111 092 A1 bzw. der prioritätsälteren, nicht vorveröffentlichten EP 0 255 042 A1 bekannt.

Beiden Druckschriften liegt die Erkenntnis zugrunde, daß eine hochgenaue Kupplung zweier Teile wie z.B. eines Spannfutters an einer Werkzeugmaschine und eines Werkzeug- oder Werkstückhalters auch dann erreicht werden kann, wenn eines von zwei ineinandergreifenden Kupplungsorganen federnd ausgebildet ist.

Bei der EP 0 111 092 A1 wird eine flache, in Umfangsrichtung starre Federscheibe vorgeschlagen, die Öffnungen aufweist, in welche keilförmige Zapfen hineinragen, welche beim Zusammenfügen die seitlichen Ränder der Ausnehmungen der Federscheibe elastisch verformen.

Bei der EP 0 255 042 greifen keilförmige Leisten in eine rechteckige Nut des Gegenstückes ein, wobei in die Seitenwände der Nut Schlitze eingeschnitten sind, die bewirken, daß die an die Öffnung der Nut angrenzenden Teile als elastische Lippen ausgebildet sind.

Eine ähnliche Vorrichtung ist aus der EP 0 180 866 A2 bekannt.

Sie dient zum Einspannen eines Werkstückes während eines Bearbeitungsprozeses, der aus mehreren aufeinanderfolgenden Bearbeitungsgängen besteht. Das Werkstück wird dabei auf eine Palette aufgespannt, an deren Unterseite profilierte Ausnehmungen vorhanden sind. Im Maschinentisch sind ebenfalls ähnliche Ausnehmungen vorhanden. Im gekuppelten Zustand liegt in dem durch die jeweils gegenüberliegenden Nuten des Maschinentisches und der Palette gebildeten Hohlraum ein Tragbolzen, der aufgrund der konischen Form der Seitenwände der Nuten für eine präzise Ausrichtung zwischen Palette und Maschinentisch sorgt. Für eine statisch bestimmte Lage dürfen nur zwei einander zugeordnete Nutenpaare (an Maschinentisch und Palette) konisch ausgebildet sein, während alle weiteren Nuten einen solchen Querschnitt haben müssen, daß dort in der Ebene der Palette ein Längenausgleich möglich ist. Es darf dort mit einem der beiden Teile (Maschinentisch oder Palette) und dem Tragbolzen nur eine einzige Linienberührung stattfinden, während bei den konischen Nuten pro Nut ja jeweils zwei Linienberührungen vorhanden sind.

Damit die Palette auf mehreren hintereinander zu durchlaufenden Bearbeitungsmaschinen jeweils exakt die gewünschte Position einnimmt, müssen sowohl die Nuten im Maschinentisch und in der Palette sowie die Tragbolzen mit äußerster Präzision gefertigt und positioniert sein. Dadurch wird die Vorrichtung und insbesondere die Paletten sehr aufwendig und damit teuer. Im Laufe der Zeit nimmt die Spanngenauigkeit jedoch ab, da sich die Nuten und die Tragbolzen infolge der wiederholt beaufschlagten Spannkräfte, die auf relativ kleine Flächen (theoretisch Linienberührung) wirken, abnutzen bzw. verformen, insbesondere durch den Aufschlagimpuls beim Aufsetzen der Palette und durch Reibung beim Verschieben der Palette.

Zur Verringerung der Abnutzung schlägt die EP-A2-0 180 866 vor, die Tragbolzen mit federelastischen Abschnitten zu versehen, deren Querschnitt größer als der der Tragbolzen ist. Beim Aufsetzen der Palette findet also zunächst eine Berührung zwischen den elastischen Abschnitten der Trageglieder und den Nuten der Palette statt, was dämpfend auf die Aufschlags- und Reibungskräfte wirkt. Im endgültig gespannten Zustand verformt sich der elastische Teil allerdings soweit, daß wiederum nur der unelastische Tragbolzen an den zugeordneten Flächen der Nuten satt anliegt. Somit können sich durch die Spannkräfte und die bei der Bearbeitung auftretenden Kräfte nach wie vor die Tragbolzen und/oder die Wände der Nuten verformen. Am stärksten wirkt sich dieser Verschleiß auf die Genauigkeit in der zu den zu koppelnden Gegenständen senkrechten Richtungen (Z-Achse) aus.

Aufgabe der vorliegenden Erfindung ist es daher, die gattungsgemäße Vorrichtung so auszubilden, daß die Spanngenauigkeit an einer oder auch an mehreren von der Palette in einer Folge durchwanderten Maschinen auch nach vielen Spannvorgängen noch den geforderten hohen Präzisionsansprüchen genügt.

Diese Aufgabe wird bei der gattungsgemäßen Vorrichtung durch die im Patentanspruch 1 angegebenen Merkmale gelöst. Vorteilhafte Ausgestaltung und Weiterbildung der Erfindung sind den Unteransprüchen zu entnehmen.

Die Erfindung nutzt den Gedanken, daß die relative Lage von Werkzeugtisch und Palette bis hin zum endgültigen Positionszustand unter Einfluß von Federkräften erfolgt. Dabei ist es völlig ausreichend, wenn lediglich eines der beiden Kupplungsteile, vorteilhafterweise der maschinenseitige Teil, mit hoher Fertigungsgenauigkeit ausgeführt ist. Der palettenseitige Teil kann dann mit größeren Fertigungstoleranzen hergestellt sein, wobei im Ergebnis für die endgültige Spannposition des Werkstücks die höhere Präzision des präziseren Kupplungsteiles allein maßgeblich ist.

Man erhält also den Vorteil einer hochpräzisen Positionierung des Werkstückes trotz eines relativ ungenau bzw. unpräzise hergestellten Kupplungsteiles. Vorzugsweise ist das unpräzisere Teil an der Palette, so daß man recht einfach und damit sehr kostengünstig zu fertigende und normalerweise in hohen Stückzahlen benötigte Paletten verwenden kann und trotzdem die äußerste Präzision (im µm-Bereich) erhalten kann. Durch die elastische Nachgiebigkeit werden nämlich Fehler bzw. Fertigungstoleranzen ausgeglichen.

Zum besseren Verständnis sei darauf hingewiesen, daß die Palette üblicherweise an einem Einrichtplatz außerhalb der Maschine mit dem Werkstück beschickt wird. An dem Einrichtplatz ist ebenfalls eine hochpräzise Kupplungshälfte vorhanden, auf die die Palette aufgespannt wird. Sodann wird im Bezugssystem des hochpräzisen Kupplungsteiles das Werkstück an der Palette fixiert. Ist die Lage des Werkstücks gegenüber dem hochpräzisen Kupplungsteil (am Einrichtplatz) hochgenau definiert, kann die relative Lage der dazwischenliegenden Palette zu beiden Teilen beliebig ungenau sei, wenn nur diese "ungenaue" Lage jeweils wieder auf den einzelnen zu durchlaufenden Maschinen präzise wiederholbar eingenommen wird. Genau letzteres ist dadurch gewährleistet, daß an den einzelnen Maschinen wiederum hochpräzise Kupplungsteile vorhanden sind, die denen am Einrichtplatz entsprechen, so daß die Palette auf der Maschine dann wiederum die gleiche relative Lage einnimmt, wie am Einrichtplatz.

Auch wirkt sich ein innerhalb gewisser relativ großer Grenzen er folgender Verschleiß der einzelnen Kupplungsteile nicht auf die Positioniergenauigkeit aus, da dadurch die Anordnung der Kupplungsteile bezogen auf die Kupplungsebene gewährleistet ist, daß sich ein auftretender Verschleiß einerseits gleichmäßig auf alle Kupplungsteile auswirkt und andererseits auch so, daß sich dadurch entstehende mögliche Fehler gegenseitig kompensieren bzw. aufheben. Bewirkt beispielsweise der Verschleiß an einem Kupplungsteil eine Verschiebung in einer Richtung, so wirkt sich dies am unsymmetrisch gegenüberliegenden Kupplungsteil in einem Verschleiß bzw. einer dadurch entstehenden Verschiebung in der entgegengesetzten Richtung aus.

Nach einer Weiterbildung der Erfindung erhält man auch die Möglichkeit einer revolvertrommelartigen Weiterschaltbarkeit (sogenannte Indexierung) von Werkstück oder Werkzeug zum Zwecke einer von mehreren Seiten her und/oder mit verschiedenen Werkzeugen erfolgenden Bearbeitung des Werkstückes. Auch bei dieser "Indexierung" bleibt die Spanngenauigkeit gegenüber dem Referenzsystem vollständig erhalten.

Im folgenden wird die Erfindung anhand eines Ausführungsbeispieles im Zusammenhang mit der Zeichnung ausführlich erläutert. Es zeigt:
- Fig. 1: eine Vorderansicht einer Kupplungs-Vorrichtung;
- Fig. 2: Einen Schnitt längs der Linie II - II der Fig. 1; Diese Fig. dient ebenso wie die Fig. 2-4 nur zur Veranschaulichung der umfeldes der Erfindung, weicht jedoch hinsichtlich der Aufnahmeeinrichtung von der Erfindung ab;
- Fig. 3: einen Schnitt längs der Linie III - III der Fig. 2 zur Darstellung eines Paares zusammenwirkender Kupplungsorgane mit lagerbockähnlich ausgebildeten, elastisch verformbarem Aufnahmeelement und zugeordnetem Profilstück in Form eines Bolzens in vergrößertem Maßstab;
- Fig. 4: eine Darstellung ähnlich Fig. 3 jedoch in einer anderen Ausführung des Profilstückes in Form einer Rundrippe bzw. einer Kugel sowie unter zusätzlicher Darstellung von Anschlag-und Gegenanschlagflächen zur Festlegung der vertikalen Positionen (z-Achse);
- Fig. 5: ein erstes Ausführungsbeispiel mit einer anderen Variante von Kupplungsorganen, bei dem das elastische Aufnahmeteil durch symmetrisch in den Lagebockhälften vorgesehenen Hohlräumen realisiert ist, wobei die Darstellung wiederum in einer Schnittebene ähnlich dem Schnitt III - III der Fig. 2 erfolgt;
- Fig. 6: ein zweites Ausführungsbeispiel der Kupplungsorgane in perspektivischer Darstellung;

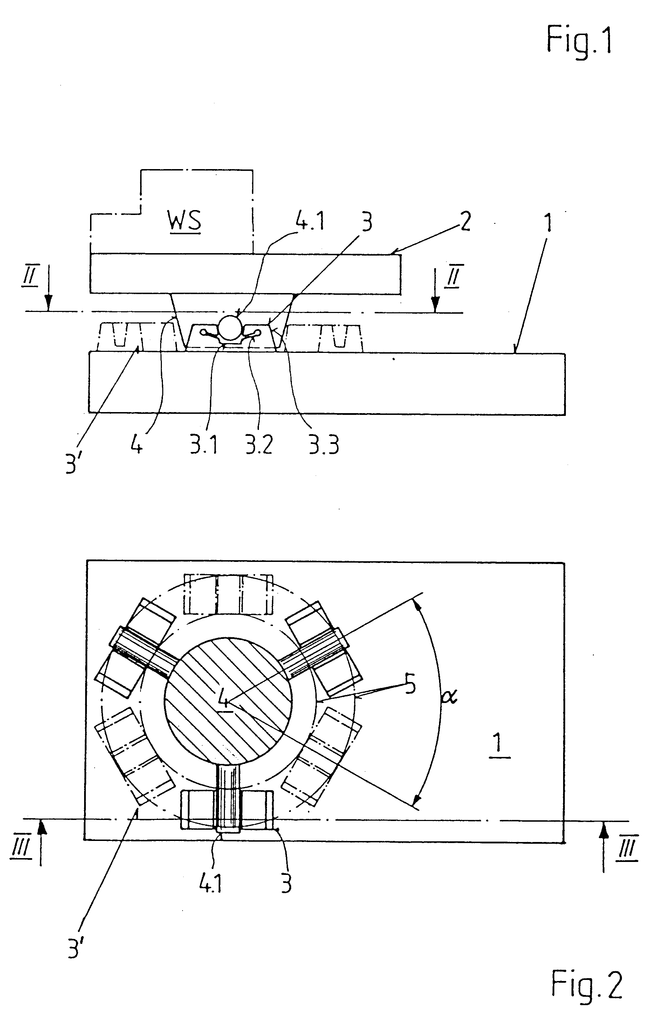

Die Vorrichtung zur wiederholbaren Verbindung eines Werkstückes oder Werkzeuges mit einer Werkzeugmaschine gemäß den Fig. 1 und 2 setzt sich aus einem in der unteren Position gezeichneten und an der Werkzeugmaschine befestigten Kupplungsteil 1 (zweiter Gegenstand) und einem in der oberen Position aufscheinenden Kupplungsteil zusammen, wobei letzterer als der Träger 2 oder Handhabungsunterlage für ein Werkstück WS (erster Gegenstand) oder ein Werkzeug dient. Die beiden Kupplungsteile 1, 2 sind in ihren einander zugewandten Flächen, den Kupplungsflächen, mit paarweise miteinander zusammenwirkenden Kupplungsorganen versehen. Letztere sind an dem der Werkzeugmaschine zugehörigen Kupplungsteil 1 als elastisch verformbare, lagerbockähnliche Aufnahmeeinrichtungen bzw. -elemente 3 und an dem Träger 2 als starre Profilstücke 4.1 ausgebildet. Die Aufnahmeelemente 3 können je mit einer individuellen Grundplatte beliebiger Form (in der Zeichnung nicht gezeigt) versehen und jeweils am Umfang eines Teilkreisringes 5 oder auch mehrerer konzentrischer solcher an der Kupplungsfläche des der Werkzeugmaschine zugehörigen Kupplungsteils 1 angebracht sein. Sie können jedoch auch einstückig mit dem besagten Kupplungsteil 1 ausgebildet sein. Das Kupplungsteil 1 kann dabei ein Schlitten oder der Tisch der Maschine sein.

In den Figuren 1 und 2 sind zwei Sätze zu je drei elastisch verformbaren Aufnahmeelementen 3 und 3ʹ am Umfang des Teilkreisringes 5 verteilt angeordnet. Die Aufnahmeelemente 3ʹ des zweiten Satzes sind gegenüber derjenigen 3 des ersten Satzes jeweils um den gleichen Winkel "Alpha" versetzt.

In gewissen Fällen kann sich ferner als vorteilhaft erweisen, wenn beispielsweise zur Festlegung mehrerer Winkelstellungen des Trägers 2 die Aufnahmeelemente 3, 3ʹ am Umfang mehrerer konzentrischer Teilkreisringe 5 verteilt vorgesehen werden.

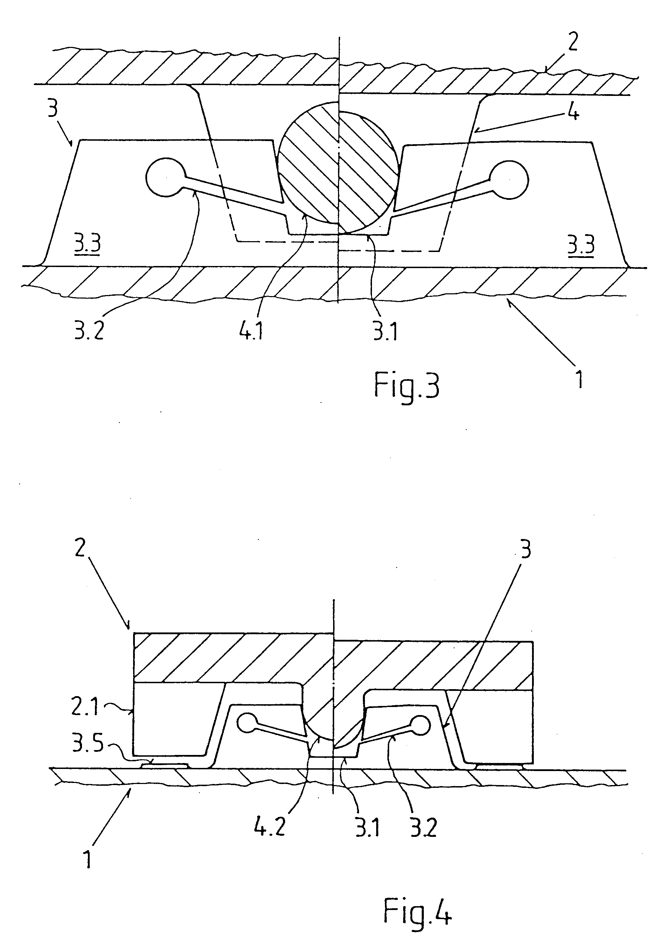

Wie aus den Fig. 1 bis 6 hervorgeht, ist in die lagerbockähnlichen, elastisch verformbaren Aufnahmeelemente 3,3ʹ je eine Nut 3.1 eingearbeitet. Mit einer jeden Nut 3.1 wirkt jeweils ein in diese eingreifendes Profilstück 4.1 bzw. 4.2 des Trägers 2 zusammen, das in den Ausführungsformen gemäß den Figuren 1 bis 3 sowie 5 und 6 als an einem konischen Vorsprung 4 angebrachter Bolzen 4.1 und in der Ausführungsform nach der Fig. 4 in der Gestalt einer Rundrippe 4.2 an der Kupplungsfläche des Trägers 2 ausgestaltet ist. Anstelle von Rundrippen 4.2 wären auch kugelförmig ausgeführte Profilstücke verwendbar.

Während bei der vorliegenden Ausführungsform der Erfindung die starren Profilstücke 4.1, 4.2 des Trägers 2 und die lagerbockähnlichen, elastisch verformbaren Aufnahmeelemente 3,3ʹ dem der Werkzeugmaschine zugehörigen Kupplungsteils 1 zugeordnet sind, ist grundsätzlich auch eine umgekehrte Anordnung besagter Kupplungsorgane möglich. Ebenso kann die Anzahl der miteinander zusammenwirkenden Kupplungsorgane 3,3ʹ, 4.1, 4.2 auf beiden Kupplungsteilen 1, 2 gleich oder verschieden sein.

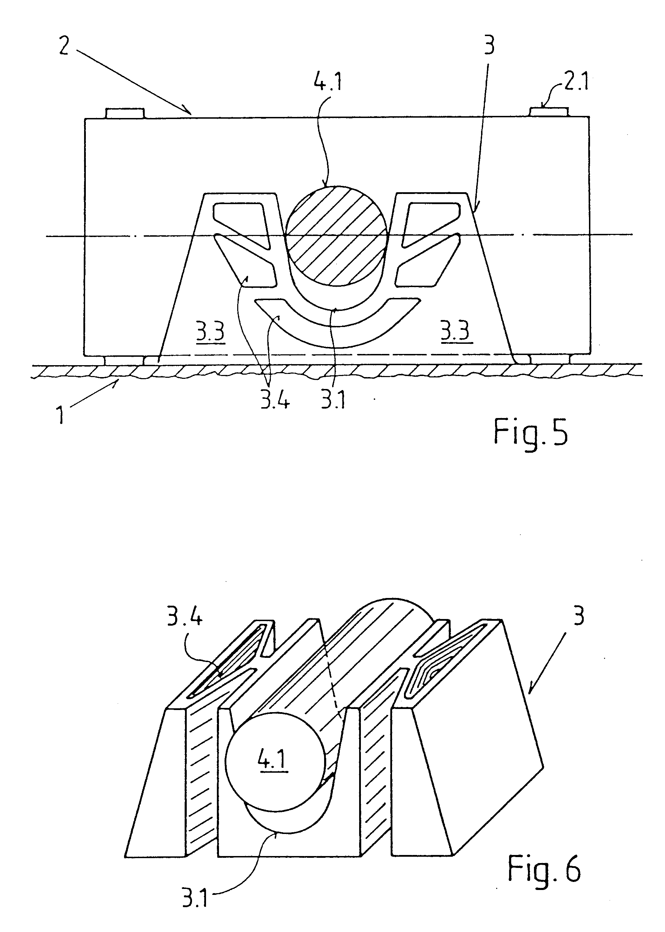

Die Nuten 3.1 der Aufnahmeelemente 3,3ʹ weisen vorteilhaft einen Trapezquerschnitt auf. Sie können jedoch mit einer anderen Querschnittsform, beispielsweise mit schrägen Seitenwandflächen und kreiszylindrischem Nutengrund (vgl. Fig. 5 and 6) oder mit Dreieckform, ausgebildet sein.

Im Hinblick darauf, das eine hochpräzise Bearbeitung des Werkstückes WS in einer Folge von Bearbeitungsgängen auf verschiedenen Werkzeugmaschinen gewährleistet werden soll, ist das Werkstück WS oder das für die Bearbeitung erforderliche Werkzeug auf dem Träger 2 in einer in Bezug auf ein auf die Werkzeugmaschine und den Einrichtplatz identisch bezogenes Referenzsystem (dreidimensional mit sechs Freiheitsgraden; z.B. drei karthesische Achsen und drei Orientierungswinkel) genau bestimmten, räumlichen Lage zu positionieren. Diese Lage wird dann beim Ankuppeln des Trägers jeweils an eine Werkzeugmaschine erfindungemäß nach Überwindung eines elastisch nachgebenden Widerstandes erreicht. Die zu überwindende Elastizität ist nach dem Erfindungsgedanken im Gegensatz zu der bekannten Kupplungsvorrichtung in die lagerbockähnlichen Übertragungselemente 3, 3ʹ installiert, die als integrierte Bestandteile des einen der beiden Kupplungsteile 1,2 ausgebildet sind. Hierzu kann je ein schlitzartiger, achsparalleler Ausschnitt 3.2 beidseits der Nut 3.1 in einem jeden elastisch verformbaren, lagerbockähnlichen Aufnahmeelement 3, 3ʹ ausgebildet sein (vgl. Fig. 1,3,4), was nicht Gegenstand der Erfindung ist. Der Ausschnitt 3.2 geht in Nutengrundnähe von der jeweiligen Seitenfläche der Nut 3.1 aus und erstreckt sich schräg nach oben gegen die Deckfläche der jeweiligen Lagerbockhälfte 3.3. Der Ausschnitt 3.2 soll mindestens mit einer Breite b ausgelegt sein, so daß sich bei einer elastischen Verformung der Übertragungselemente 3, 3ʹ unter einer Spannkraft und bei gleichzeitigem Anschlagen der starren Profilstücke 4.1, 4.2 des Trägers 2 gegen den Grund und die Seitenflächen der Nuten 3.1 seine Seitenflächen nicht berühren (vgl. jeweilige rechte Seite der Fig. 3 und 4). Jeder Lagerbockhälfte 3.3 kann unter der Wirkung einer normal zur Kupplungsfläche des der Werkzeugmaschine zugehörigen Kupplungsteils 1 gerichteten Kraft unabhängig von der anderen Lagerbockhälfte 3.3 mehr oder weniger einfedern. Dadurch wird ein Ausgleich fabrikationsbedingter Toleranzen bezüglich Form und räumlicher Lage der starren Profilstücke 4.1, 4.2 ermöglicht.

Nach der Erfindung kann eine elastische Nachgiebigkeit der Nutenwände durch symmetrisch in den Lagerbockhälften 3.3 angeordnete Hohlräume 3.4 erreicht werden, die jedoch im Gegensatz zu den schlitzartigen Ausschnitten 3.2 nicht mit den Nuten 3.1 kommunizieren. Die Hohlräume 3.4 können parallel zu den Nuten 3.1 (vgl. Fig. 5) oder rechtwinklig zu deren Längsrichtung verlaufend (vgl. Fig 6) ausgebildet sein. Im ersten Falle können die Hohlräume 3.4 jeweils durch parallel zur Nut vorgesehene Trennwände unterteilt werden.

Die beschriebenen elastisch verformbaren Aufnahmeelemente 3,3ʹ erweisen sich starr gegenüber etwa parallel zur Schnittebene II - II in Fig. 1 gerichteten Seitenkräften. Durch die schrägen Seitenflächen und die radiale Verkürzug des "Federarmes" beim Einfedern um einen gedachten Federdrehpunkt läßt sich eine Fehlpositionierung des Bolzens in der Schnittebene II - II dennoch ausgleichen.

Es ist auch möglich zur Bildung eines Anschlages in der zur Kupplungsfläche des der Werkzeugmaschine zugehörigen Kupplungsteiles 1 normalen Raumrichtung an besagter Fläche beidseits eines jeden elastisch verformbaren, lagerbockähnlichen Übertragungselementes 3,3ʹ je eine Anschlagfläche 3.5 vorzusehen, wie dies in den Fig. 4 und 5 veranschaulicht ist. Die Grundfläche der Nuten 3.1, die ja vom jeweiligen eintauchenden Profilstück 4.1, 4.2 der Handhabungsunterlage 2 nicht berührt wird, kann hier einfach kreiszylindrisch ausgestaltet werden. Bei dieser Ausführungsform der Kupplung weist die Handhabungsunterlage 2 auch mit den Anschlagflächen 3.5 zusammenwirkende Gegenanschläge 2.1 auf. Diese Ausführung bringt den zusätzlichen Vorteil, daß sich anfallender Schmutz (z.B. Späne) im Raum zwischen Profilstück und Nutengrund ansammeln kann, ohne die Spanngenauigkeit zu beeinträchtigen.

In Fig. 5 ist der Träger 2 so ausgebildet, daß ein Werkstück WS oder ein Werkzeug wahlweise entweder auf ihrer Oberseite 2.2 oder auf ihrer Unterseite 2.3 aufspannbar ist. Entsprechend weist sie an ihren besagten Flächen jeweils auch Gegenanschläge 2.1 auf. Die Bolzen 4.1 sind bei dieser Ausführungsform im wesentlichen am Umfang der horizontalen Mittelebene des Trägers 2 angeordnet.

Die Wirkungsweise der erfindungsgemäßen Kupplung wird anhand der Fig. 1 bis 6 wie folgt erklärt:

Nachdem an einem Voreinstellplatz ein Werkstück WS auf den Träger 2 in Bezug auf das Referenzsystem sämtlicher zu durchlaufender Werkzeugmaschinen genau positioniert wurde, wird der Träger 2 im Verlauf des Bearbeitungsprozesses jeweils auf den der einzelnen Werkzeugmaschine zugehörigen Kupplungsteil 1 aufgesetzt, so daß seine starren Profilstücke 4.1, 4.2 in die Nuten 3.1 der elastisch verformbaren, lagerbockähnlichen Aufnahmeelemente 3 oder 3ʹ eintauchen. Das Eintauchen setzt sich unter der Wirkung bekannter Spannmittel bis zur Berührung der elastisch nachgiebigen Nutenwände fort. Während der fortgesetzten Tauchbewegung bis zum Anschlag in Richtung der Z-Achse wird gleichzeitig auch die Zentrierung in X-und Y-Richtung herbeigeführt. Besagte Anschläge werden in den beiden Hauptrichtungen (X, Y) einer Ebene, die etwa durch die Achsen sämtlicher Bolzen 4.1 oder Rundrippen 4.2 parallel zu der Kupplungsfläche des der Werkzeugmaschine zugehörigen Kupplungsteiles 1 verläuft und als Kupplungsebene angesehen werden kann, durch die Seitenflächen der Nuten 3.1 in den elastisch verformbaren Aufnahmeelementen 3, 3ʹ des letztgenannten Kupplungsteils 1 gebildet. Infolge einer beschränkten elastischen Nachgiebigkeit der Nutenwände - es handelt sich ja hierbei um Bruchstücke von Millimetern - werden herstellungsbedingte Unregelmäßigkeiten der Bolzen 4.1 in den beiden Hauptrichtungen (X, Y) der Kupplungsebene ausgeglichen, so daß eine genaue Positionierung des Werkstückes WS in Bezug auf besagte Achsen (X, Y) sichergestellt wird. Eine Voraussetzung hierfür ist, daß an der Kupplungsfläche des der Werkzeugmaschine zugehörigen Kupplungsteiles 1 mindestens drei elastisch verformbare Übertragungselemente 3 vorgesehen sind.

Der dritte Anschlag in der zur Kupplungsebene normalen Hauptrichtung (z) des Raumes kann entweder an der ebenen Nutengrundfläche (vgl. Fig. 3) oder in der Gestalt von äußeren Anschlagflächen 3.5 beidseits eines jeden lagerbockähnlichen und elastisch verformbaren Aufnahmeelementes 3,3ʹ gegeben sein (vgl. Fig. 4 u. 5).

Folgend aus dem vorangehend geschilderten Sachverhalt, ist bei der Kupplung gemäß der Erfindung eine genaue Bearbeitung der Kupplungsorgane lediglich des einen der beiden Kupplungsteile 1,2, vorzugsweise der elastisch verformbaren Aufnahmeelemente 3,3ʹ, erforderlich.

Die Erfindung ermöglicht auf relativ einfache Art und Weise ein rasches Ankuppeln eines Werkstückes WS oder eines Werkzeuges an eine jede zu durchlaufende Werkzeugmaschine zwecks Durchführung aufeinanderfolgender hochpräziser Bearbeitungsgänge jeweils in identischer Position.

Durch manuellen Eingriff oder unter Zuhilfenahme eines Industrieroboters wird ferner auch ein revolvertrommelartiges Weiterschalten des Trägers 2 samt Werkstück WS oder Werkzeug auf einer Werkzeugmaschine realisierbar (vgl. Fig. 2). Es können dazu am Umfang eines Teilkreisringes 5 in der Kupplungsfläche des der Werkzeugmaschine zugehörigen Kupplungsteiles 1 beispielsweise zwei Sätze mit der gleichen Anzahl elastisch verformbarer, lagerbockähnlicher Aufnahmeelemente 3,3' vorgesehen sein. Dabei sind die Aufnahmeelemente 3' des zweiten Satzes gegenüber demjenigen 3 des ersten Satzes jeweils um den gleichen Winkel 'Alpha' versetzt anzuordnen.

## Patentansprüche

1. Vorrichtung zur wiederholbaren, hochgenauen Festlegung der relativen räumlichen Lage eines ersten Gegenstandes (WS) in Bezug auf zweite Gegenstände (1), insbesondere zur hochgenauen Positionierung eines Werkstückes oder Werkzeuges bezüglich einer Werkzeugmaschine, mit einem Träger (2), auf dem der erste Gegenstand (WS) gehalten ist und mit einer teilweise elastischen Kupplungsvorrichtung, die aus Profilstücken (4.1) und aus diesen zugeordneten, elastisch verformbaren Aufnahmeeinrichtungen (3) besteht, die die Lage des Trägers (2) gegenüber dem zweiten Gegenstand (1) definiert, wobei eines der beiden Teile der Kupplungsvorrichtung (4.1 oder 3) hochpräzise gefertigt und hochpräzise positioniert ist, während beim anderen Teil (3 oder 4.1) der Kupplungsvorrichtung hinsichtlich Form und räumlicher Anordnung größere Toleranzen zugelassen sind,
dadurch gekennzeichnet,
daß die elastisch verformbaren Aufnahmeeinrichtungen (3) als lagerbockähnliche Einzelteile mit je einer individuellen Grundplatte beliebiger Form ausgebildet und jeweils am Umfang eines Teilkreisringes (5) oder mehrerer konzentrischer solcher am zweiten Teil (1) bzw. am Träger (2) angebracht sind,
daß in die lagerbockähnlichen Aufnahmeeinrichtungen (3, 3') je eine axiale Nut (3.1) eingearbeitet ist, und
daß zur Erzielung der Federeigenschaften der Aufnahmeeinrichtung (3) in beiden Hälften (3.3) der lagerbockähnlichen Aufnahmeeinrichtung (3, 3') Hohlräume (3.4) ausgebildet sind, die ohne Verbindung zur Nut (3.1) sind.

2. Vorrichtung nach Anspruch 1, dadurch gekennzeichnet, daß die axiale Nut (3.1) einen Trapezquerschnitt aufweist.

3. Vorrichtung nach Anspruch 1 oder 2, dadurch gekennzeichnet, daß die Hohlräume (3.4) parallel zu der Nut (3.1) verlaufend angeordnet sind.

4. Vorrichtung nach Anspruch 1 oder 2, dadurch gekennzeichnet, daß die Hohlräume (3.4) rechtwinklig zur Längsrichtung der Nut (3.1) verlaufen.

5. Vorrichtung nach einem der Ansprüche 1 bis 4, dadurch gekennzeichnet, daß die Profilstücke starre Bolzen (4.1) sind, die beim Ankuppeln in die Nuten (3.1) eingreifen und unter Wirkung einer Spannkraft zum Anschlag je an den beiden Seitenflächen der Nuten (3.1) bringbar sind.

6. Vorrichtung nach Anspruch 5, dadurch gekennzeichnet, daß die Bolzen (4.1) auch in Anschlag mit der Grundfläche der Nuten (3.1) bringbar sind.

7. Vorrichtung nach einem der Ansprüche 1 bis 6, dadurch gekennzeichnet, daß mindestens drei Kupplungsvorrichtungen (4.1 und 3) vorgesehen sind.

8. Vorrichtung nach Anspruch 7, dadurch gekennzeichnet, daß mindestens zwei Sätze von Aufnahmeeinrichtungen (3) vorgesehen sind, wobei sich die beiden Sätze je aus der gleichen Anzahl lagerbockähnlicher Aufnahmeeinrichtungen (3) zusammensetzen, die sämtlich am Umfang eines gemeinsamen Teilkreisringes (5) vorgesehen und dabei die Aufnahmeeinrichtungen (3) des zweiten Satzes gegenüber denjenigen des ersten Satzes jeweils um den gleichen Winkel (α) versetzt sind.

9. Vorrichtung nach einem der Ansprüche 1 bis 7, dadurch gekennzeichnet, daß mindestens zwei Sätze von Aufnahmeeinrichtungen (3) vorgesehen sind, die jeweils eine andere Anzahl lagerbockähnlicher Aufnahmeeinrichtungen (3) aufweisen, die am Umfang zweier konzentrischer Teilkreisringe derart verteilt angeordnet sind, daß sie mit einem einzigen Satz entsprechender, starrer Profilstücke (4.1, 4.2) eines anzukoppelnden anderen Teiles in zwei verschiedenen Winkelstellungen des letzteren in Eingriff bringbar sind.

10. Vorrichtung nach Anspruch 5 oder 6, dadurch gekennzeichnet, daß die Bolzen (4.1) am Umfang einer horizontalen Mittelebene des an seiner Ober- und Unterseite symmetrisch ausgebildeten, beidseitig bestückbaren Trägers (2) angeordnet sind.

11. Vorrichtung nach einem der Ansprüche 1 bis 4, dadurch gekennzeichnet, daß die Profilstücke als Rundrippen (4.2) oder Kugeln einstückig mit dem Träger (2) ausgebildet sind.

12. Vorrichtung nach einem der Ansprüche 1 bis 5 und 6 bis 11, dadurch gekennzeichnet, daß am Träger (2) und am zweiten Gegenstand (1) jeweils Anschläge (2.1) bzw. Gegenanschläge (3.5) vorgesehen sind, die den senkrechten Abstand zwischen dem Träger (2) und dem zweiten Gegenstand (1) im gespannten Zustand definieren.

## Claims

1. A device for repeatably setting the relative spatial position of a first object (WS) in relation to second objects (1) with high accuracy, in particular for positioning a workpiece or tool in relation to a machine tool with high accuracy, having a carrier (2), on which the first object (WS) is held, and having a partly elastic coupling device which comprises shaped pieces (4.1) and elastically deformable receiving arrangements (3) associated therewith and defines the position of the carrier (2) in relation to the second object (1), wherein one of the two parts of the coupling device (4.1 or 3) is manufactured with high precision and positioned with high precision, whereas greater tolerances are allowed with the other part (3 or 4.1) of the coupling device with regard to form and spatial arrangement, characterised in that the elastically deformable receiving arrangements (3) are formed as bearing-block-like components each having an individual base plate of any form and each mounted on the circumference of a reference circle (5) or of several concentric reference circles on the second part (1) or on the carrier (2), in that an axial groove (3.1) is worked into each of the bearing-block-like receiving arrangements (3,3'), and in that cavities (3.4), which do not communicate with the groove (3.1), are formed in both halves (3.3) of the bearing-block-like receiving arrangement (3,3') in order to obtain the elastic qualities of the receiving arrangement (3).

2. A device according to claim 1, characterised in that the axial groove (3.1) has a trapezoidal cross-section.

3. A device according to claim 1 or 2, characterised in that the cavities (3.4) are arranged so as to extend parallel to the groove (3.1).

4. A device according to claim 1 or 2, characterised in that the cavities (3.4) extend at right angles to the longitudinal direction of the groove (3.1).

5. A device according to any one of claims 1 to 4, characterised in that the shaped pieces are rigid bolts (4.1) which, when coupled, engage in the grooves (3.1) and can be brought to rest against both side surfaces of the grooves (3.1) under the effect of a clamping force.

6. A device according to claim 5, characterised in that the bolts (4.1) can also be brought to rest against the base of the grooves (3.1).

7. A device according to any one of claims 1 to 6, characterised in that at least three coupling devices (4.1 and 3) are provided.

8. A device according to claim 7, characterised in that at least two sets of receiving arrangements (3) are provided, the two sets each being composed of the same number of bearing-block-like receiving arrangements (3) which are all provided on the circumference of a common reference circle (5), and the receiving arrangments (3) of the second set each being displaced by the same angle (α) in relation to those of the first set.

9. A device according to any one of claims 1 to 7, characterised in that at least two sets of receiving arrangements (3) are provided which each have a different number of bearing-block-like receiving arrangements (3) distributed on the circumference of two concentric reference circles in such a way that they can be brought into engagement with a single set of corresponding, rigid shaped pieces (4.1, 4.2) of another part to be coupled in two different angular positions of the latter.

10. A device according to claim 5 or 6, characterised in that the bolts (4.1) are arranged on the periphery of a horizontal central plane of the carrier (2) which is symmetrically formed on its upper and lower sides and can be equipped on both sides.

11. A device according to any one of claims 1 to 4, characterised in that the shaped pieces are formed as cylindrical ribs (4.2) or spheres in one piece with the carrier (2).

12. A device according to any one of claims 1 to 5 and 6 to 11, characterised in that stops (2.1) and counterstops (3.5), which define the vertical distance between the carrier (2) and the second object (1) in the clamped state, are provided on the carrier (2) and the second object (1) respectively.

## Revendications

1. Dispositif pour fixer de manière réitérable et très précise la position spatiale relative d'un premier objet (WS) par rapport à des deuxièmes objets (1), en particulier pour positionner de façon très précise une pièce à usiner ou un outil par rapport à une machine-outil, comprenant un support (2), sur lequel le premier objet (WS) est fixé, et un organe de couplage partiellement élastique, composé de pièces profilées (4.1) et de moyens de réception (3) déformables élastiquement, associés à celui-ci et qui définissent la position du support (2) par rapport au deuxième objet (1), l'une des deux parties de l'organe de couplage (4.1 ou 3) étant usinée avec une grande précision et positionnée de façon très précise, tandis que l'autre partie (3 ou 4.1) de l'organe de couplage admet des tolérances de forme et d'agencement spatial plus larges, caractérisé en ce que les organes de réception (3) déformables élastiquement sont réalisés sous la forme de pièces unitaires analogues à des bloc-paliers, comportant chacune une plaque de base individuelle de forme quelconque et montée chacune sur la périphérie d'un anneau de cercle partiel (5) ou de plusieurs de ceux-ci, sur la deuxième partie (1) ou sur le support (2), en ce qu'une rainure axiale (3.1) est usinées dans les organes de réception (3, 3') analogues à des bloc- paliers, et en ce que, pour obtenir les propriétés élastiques de l'organe de réception (3), des espaces creux (3.4), n'ayant pas de liaison avec la rainure (3.1) sont réalisés dans les deux moitiés (3.3) de l'organe de réception (3, 3') analogue à un bloc-palier.

2. Dispositif selon la revendication 1, caractérisé en ce que la rainure axiale (3.1) présente une section transversale trapézoïdale.

3. Dispositif selon la revendication 1 ou 2, caractérisé en ce que les espaces creux (3.4) sont disposés en s'étendant parallèlement à la rainure (3.1).

4. Dispositif selon la revendication 1 ou 2, caractérisé en ce que les espaces creux (3.4) s'étendent perpendiculairement à la direction longitudinale de la rainure (3.1).

5. Dispositif selon l'une des revendications 1 à 4, caractérisé en ce que les pièces profilées sont des boulons rigides (4.1) qui s'engagent dans les rainures (3.1) lors de l'accouplement et peuvent être mis en butée chacun sur les deux faces latérales des rainures (3.1) sous l'effet d'une force de serrage.

6. Dispositif selon la revendication 5, caractérisé en ce que les boulons rigides (4.1) peuvent également être mis en butée sur la face de base des rainures (3.1).

7. Dispositif selon l'une des revendications 1 à 6, caractérisé en ce qu'au moins trois organes de couplage (4.1 et 3) sont prévus.

8. Dispositif selon la revendication 7, caractérisé en ce qu'au moins deux jeux d'organes de réception (3) sont prévus, les deux jeux étant composés chacun du même nombre d'organes de réception (3) analogues à un bloc-palier, prévus globalement sur la périphérie d'un anneau de cercle partiel (5) commun et les organes de réception du deuxième jeu étant décalés par rapport à ceux du premier jeu, chaque fois du même angle (α).

9. Dispositif selon l'une des revendications 1 à 7, caractérisé en ce qu'au moins deux jeux d'organes de réception (3) sont prévus, présentant chacun un nombre différent d'organes de réception (3) analogues à des bloc-paliers, répartis sur la périphérie de deux anneaux de cercle partiel concentriques, de manière qu'ils puissent être mis en contact par un jeu unique de pièces profilées rigides (4.1, 4.2) correspondantes, d'une autre pièce à accoupler, dans deux positions angulaires différentes de cette dernière.

10. Dispositif selon la revendication 5 ou 6, caractérisé en ce que les boulons (4.1) sont disposés sur la périphérie d'un plan médian horizontal du support (2) qui présente des formes symétriques sur sa face supérieure et inférieure et qui est susceptible d'être garni de pièces des deux côtés.

11. Dispositif selon l'une des revendications 1 à 4, caractérisé en ce les pièces profilées sont réalisées sous forme de nervures rondes (4.2) ou de billes, monobloc avec le support (4).

12. Dispositif selon l'une des revendications 1 à 5 et 6 à 11, caractérisé en ce sur la support (2) et sur le deuxième objet (2) sont chaque fois prévues des butées (2.1) ou des contre-butées (3.5) qui définissent l'espacement vertical entre le support (2) et le deuxième objet (1) à l'état serré.
